# EUROPEAN PATENT SPECIFICATION

(11) **EP 4 192 764 B1**
(45) Date of publication and mention of the grant of the patent: **21.08.2024**
(21) Application number: 21743284.8
(22) Date of filing: 21.07.2021
(51) Int. Cl.: B65D 85/804, B65B 29/02, B26D 1/04, B26D 5/42, B26D 7/01, B26D 7/02, B26D 7/14, B29C 65/08, B65B 51/22, B65B 61/00, B65B 61/06, B65B 61/20, B65D 1/02, B26D 1/06, B29C 65/00, B29C 51/08, B29C 51/26, B29L 31/00

(54) **METHOD AND APPARATUS FOR MAKING SINGLE-USE CAPSULES FOR BEVERAGES**
VERFAHREN UND VORRICHTUNG ZUR HERSTELLUNG VON EINWEGKAPSELN FÜR GETRÄNKE
PROCÉDÉ ET APPAREIL DE FABRICATION DE CAPSULES À USAGE UNIQUE POUR BOISSONS

(30) Priority: 10.08.2020 IT 202000019852
(43) Date of publication of application: 14.06.2023
(73) Proprietor: I.M.A. Industria Macchine Automatiche S.p.A., 40064 Ozzano dell'Emilia (BO) (IT)
(72) Inventor: MANARESI, Giorgio, 40064 Ozzano Dell'emilia (Bologna) (IT)
(74) Representative: Milli, Simone
(86) International application number: PCT/IB2021/056577
(87) International publication number: WO 2022/034400

(56) References cited:
- EP-A1- 2 730 523
- EP-B1- 2 730 523
- WO-A1-2013/064988
- WO-A1-2013/189555
- WO-A1-2014/060838
- DE-A1- 3 935 625
- US-B2- 7 910 145

## Description

### Technical field

This invention relates to the technical field of products for making infusion or extraction beverages.

More specifically, the invention relates to a method and an apparatus for making single-use beverage capsules, more specifically rigid capsules fitted internally with a filter.

### Background art

The capsules of interest for the invention are of the type which can be used by dispensing machines and have typically standardised dimensions. This type of product includes, for example, K-Cup^{®} or K-Cup^{®} compatible single-use coffee capsules.

The structure of the prior art single-use capsules comprises, in the simplest form, a rigid cup-shaped body, an internal filter containing a dose of product for extraction or infusion beverages, and a sheet, film or other element for closing the upper opening.

The rigid cup-shaped body is typically made of plastic and/or paper material and comprises a side wall usually truncated cone or cylindrical in shape and a perforatable closed bottom. At the top it has an open upper opening.

The filter is a portion of filter material, for example filter paper for beverages, fixed inside the rigid cup-shaped body in such a way as to form a concave surface with the cavity facing upwards and designed to contain a dose of product to allow the filtering when struck by a flow of water coming from the upper part of the rigid body.

Typically, these filters are made starting from a flat sheet of filter material, deformed and/or folded according to the above-mentioned concave shape.

The upper closing element is a cover or film (or generically "lid") positioned to occlude the open upper opening of the rigid cup-shaped body, preferably glued or sealed in such a way as to hermetically seal it to allow a good preservation of the dose of product contained in the capsule and prevent a contamination with extraneous agents. The closing element is designed, usually but without limiting the scope of the invention, to be perforated by a nozzle which supplies liquid, usually water.

According to the invention, the operation of the single-use capsules generally comprises a dispensing machine perforating the closing element of the rigid cup-shaped body using a needle for introducing hot water under pressure inside the rigid body, the pressurised water passes through the dose of product to allow the infusion or extraction of substances and/or essences and then passes through the filter, and then escapes from the perforated base.

It is considered important in order to protect the quality of the beverage produced that, during the perforating of the bottom of the capsule, the filter is not damaged by the element assigned to this operation. If this occurred, the final beverage would be spoilt with solid bodies of the infusion or extraction process (for example, coffee grain powder). To avoid damaging the filter, the capsules should be made wherein the filter is fixed to the rigid cup-shaped body in the correct position, that is to say, in such a way that the lower portion of the filter maintains a minimum distance from the bottom of the cup.

It is common practice in the modern market to conform to standard formats in the production of single-use capsules, to favour their compatibility with dispensing machines, which are also standardised and therefore with standard bottom perforating systems. This generally requires a standardisation of certain dimensional parameters of the rigid cup-shaped body.

At the same time, there is an increasingly felt need for diversifying the characteristics of the beverages made with the single-use capsules according to the invention. More specifically, it is necessary to vary the dose of product contained in the filter, to modify the intensity and/or the quantity of beverage which can be produced with a single capsule.

In order to adapt the capsules to different product doses, maintaining the standard format, the prior art teaches the use of filters of different sizes (that is to say, at different distances from the bottom of the rigid body) inside rigid bodies of identical dimensions. In some standardised capsules it is also possible to vary the height of the rigid cup-shaped body without adversely affecting the compatibility with the respective standard format; in this way, it is possible to increase the flexibility on the inner space and on the dose of product which may be effectively contained in the capsule.

Disadvantageously, as regards the dose of product contained, the prior art comprises the use of different machines for making different variants of capsule. More specifically, for each different size of the filter and/or each different height of the rigid cup-shaped body, or even for each combination between the two above-mentioned parameters, it is necessary to use different stations inside the production plant or in any case replace some tools.

With the gradual increase in the needs by the market for diversification of the single-use capsules, it is increasingly evident how this problem can lead to a proliferation of different tools to be used in the assembly stations on the lines for production of single-use capsules for beverages, increasing the management, feeding and maintenance costs, with the risk of inefficient or not fully operational use for many machines.

Documents WO2013/189555, EP2730523 and WO2013/064988, disclose methods and apparatuses for making single-use beverage capsules according to the preamble of respective claims 1 and 7.

### Aim of the invention

In this context, the technical purpose which forms the basis of the invention is to provide a method and an apparatus for making single-use beverage capsules in such a way as to overcome the above-mentioned drawbacks of the prior art.

More specifically, the aim of the invention is to provide a method and an apparatus for making single-use beverage capsules which are able to improve the flexibility of the production lines of the above-mentioned capsules, reducing the number of tools and increasing the efficiency.

The technical purpose indicated and the aims specified are substantially achieved by an apparatus and a method for making single-use beverage capsules, comprising the technical features described in one or more of the appended claims.

Said aims are achieved in particular by a method for making single-use beverage capsules, said capsules having a rigid cup-shaped body equipped with a closed base and an upper opening, and a filter having a concave shape and positioned inside the rigid body to form a chamber for containing a dose of product, said method comprising the following steps:
- providing an upper flange having at least one hole;
- providing a support having at least one housing seat for housing said rigid cup-shaped body, said support being positioned under the upper flange with the housing seat aligned with the hole;
- inserting the rigid cup-shaped body in said housing seat with the upper opening close to the support;
- providing a piece of filter material above the upper flange;
- actuating a first step of feeding, using a pushing element, a central portion of said piece of filter material towards said hole, up to a first position;
- upon reaching said first position of the pushing element, main locking of said piece of filter material relative to said upper flange is performed,

the method being characterised in that it comprises the following further steps:
   - making a main cut of said piece of filter material along a main closed cutting line, extending substantially circularly about said central portion, to obtain a filter for infusion of beverages;
   - after the step of making the main cut, actuating a second step of feeding, using the pushing element, the filter towards said housing seat, from the first position to a desired final position, suitable for fixing said filter to an inner surface of said rigid cup-shaped body; then
   - fixing a perimeter portion of the filter to said inner surface of said rigid cup-shaped body;
wherein said first and/or second feeding step are performed in an adjustable way in such a way as to vary, respectively, a position of said filter relative to the main closed cutting line and/or to said desired final position.

Said aims are also achieved by an apparatus for making single-use beverage capsules, said capsules comprising a rigid cup-shaped body, having a closed base and an upper opening, and a filter having a concave cross section, positioned inside the rigid body to form a chamber for containing a dose of product, said apparatus comprising:
- a support having a seat for housing a rigid cup-shaped body;
- an upper flange comprising a hole, said upper flange being positioned above the support, positioning the hole aligned with the housing seat;
- a pushing element facing said hole and movable between a withdrawn position, outside the hole, and an advanced position, inside the hole, said pushing element having a shape suitable for intercepting a central portion of the piece positioned on the upper flange and pulling the piece of filter material into the hole;
- a main locking element configured to lock said piece of filter material against the upper flange;
- a main cutting device positioned above said upper flange and configured to make a main cut of said piece of filter material, whilst said piece is locked by the main locking element, along a main closed cutting line, having a substantially circular extension around said central portion, to obtain the filter or infusion of beverages; said main cut being performed when reaching an intermediate position, located between said withdrawn and advanced positions;
- a sealing element, configured to fix a perimeter portion of the filter along an inner surface of the rigid cup-shaped body inserted in said housing seat, after said pushing element has fed the filter towards said housing seat, moving the filter from the intermediate position to the advanced position;
- a control unit configured to actuate said main cutting device when the pushing element is in said intermediate position, in such a way that the cut on the piece of filter material occurs when the pushing element is at said intermediate position, said control unit also controlling the pushing element for actuating it in such a way as to vary, respectively, a position of said filter relative to said main closed cutting line and/or to said advanced position.

### Brief description of the drawings

Further features and advantages of the invention are more apparent in the non-limiting description which follows of a preferred non-limiting embodiment of a method for making single-use beverage capsules an a relative apparatus, as illustrated in the accompanying drawings, in which:
- Figure 1 shows a partly simplified cross section of an apparatus for making single-use beverage capsules made according to the invention;
- Figure 2 shows a cross section of a single-use capsule for beverages;
- Figures 3 to 10 show the apparatus for making capsules of Figure 1 in different operating configurations according to different steps of the method according to the invention;
- Figures 11a to 11d show a portion of filter material in different configurations according to different steps of the method according to the invention;
- Figure 12 shows the step of Figure 11c in an alternative embodiment.

### Detailed description of preferred embodiments of the invention

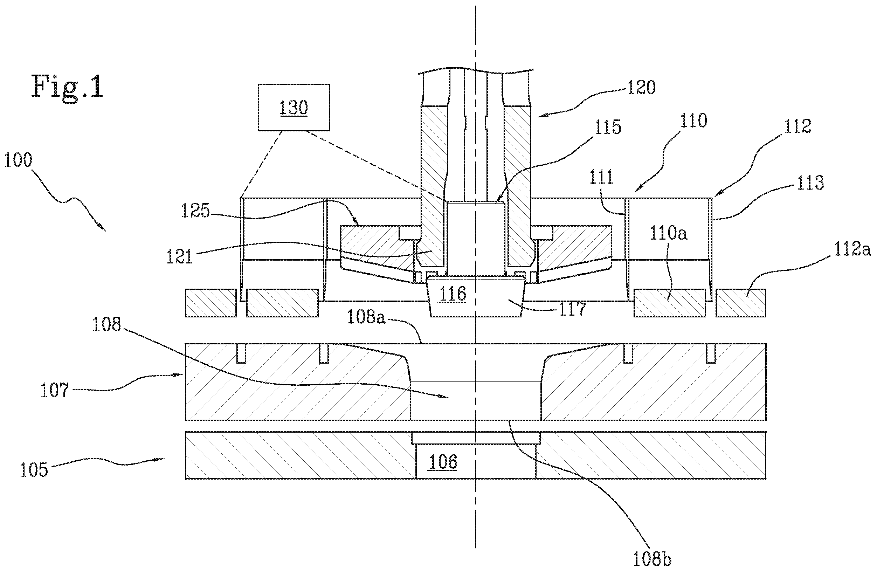

With reference to Figure 1, the numeral 100 generically indicates an apparatus for making single-use beverage capsules according to the invention.

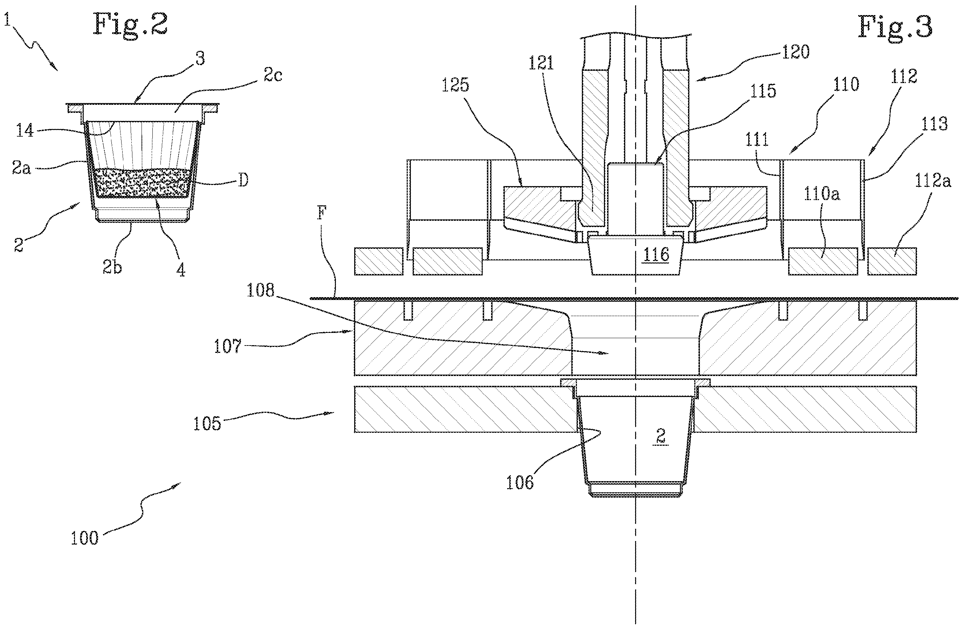

A capsule of the type which can be produced by the apparatus 100 is illustrated in a longitudinal cross section in Figure 2 and is labelled 1. In the simplest form, it comprises a rigid cup-shaped body 2, a closing element 3 made of perforatable material, and a filter 4 containing a dose of product "D" for extraction or infusion beverages, preferably ground coffee. The rigid body 2 is made of plastic and/or paper material and comprises a side wall 2a, preferably substantially frustoconical, and a closed bottom 2b, the latter made of perforatable material.

At the top of it, the rigid body 2 has an upper opening 2c which is accessible before closing.

The filter 4 comprises a portion of filter material, preferably filter paper for beverages. The filter 4 is made from a sheet "F" of filter material, to which reference is hereinafter made to denote a strip or web or other semifinished piece of thin filter paper.

A perimeter portion of the filter 4 is fixed to the inner side of the side wall 2a, preferably continuously along its circumference, to define a chamber for containing a dose of product "D". Advantageously, the filter 4 is fixed to the rigid body 2 in such a way as to have a concave surface designed to contain the dose of product "D" and allow the filtering relative to a flow of water coming from the upper opening 2c.

The closing element 3 (also called "lid") is a film or other type of cover positioned to occlude the upper opening 2c, in such a way as to hermetically seal it to allow a good conservation of the dose of product "D" contained in the capsule 1 and prevent a contamination with extraneous agents, and the closing element 3 also makes it possible to contain the water dispensed for the infusion. Preferably, the closing element 3 is configured to be perforated by a nozzle which supplies liquid under pressure of a dispensing machine.

In its simplest embodiment, the apparatus 100 comprises: a main cutting device 110, a pushing element 115 and a sealing element 120.

In the embodiment illustrated, there is an upper flange 107 which defines a central hole 108, extending about an axis of extension "X" and having an inlet section 108a, preferably flared, and an outlet section 108b. Close to the inlet section 108a, the central hole 108 may have radial inner grooves. The main cutting device 110 is located above the upper flange 107 and is equipped with a cutting edge configured to cut a piece "S" from the sheet "F" of filter material, interposed between the main cutting device 110 and the upper flange 107.

According to another aspect, there is a movable support 105 equipped with a seat 106 for housing a rigid cup-shaped body 2.

The support 105 is moved by an external device (not illustrated).

In use, the outlet section 108b faces the housing seat 106 in such a way that, when the rigid cup-shaped body 2 is positioned below, the outlet section 108b is substantially aligned with the upper opening 2c of the rigid body 2.

Preferably, the above-mentioned piece "S" of filter material consists of filter paper for coffee or tea. The main cutting device 110 is configured to cut the piece "S" along a predetermined, substantially circular main cutting line 10 to obtain a filter disc designed for inserting in a rigid cup-shaped body 2, for making a single-use capsule of the type described above.

The main cutting line 10 made by the main cutting device 110 is substantially circular and has a diameter greater than 75 mm when the filter material is positioned flat. The above-mentioned diameter must make it possible to obtain a filter 4 to be inserted correctly in the rigid body 2.

The main cutting device 110 comprises a first cylindrical blade 111, having a diameter preferably between 75 and 190 mm. For simplicity, the drawings show only the part in cross-section of the cylindrical blade 111.

The choice of the diameter of the cylindrical blade 111 is a function of the minimum dimension of the filter 4 to be made.

The first cylindrical blade 111 is movable away from, and towards, the upper flange 107, preferably driven by a linear actuator, not illustrated, connected to it. In the embodiment illustrated, the first cylindrical blade 111 is movable along the axis of extension "X".

Preferably, the apparatus 100 comprises a main locking element 110a, for example a pressing element, associated with the main cutting device 110 and configured to lock the piece "S" of filter material to favour its cutting by the main cutting device 110. For simplicity, the drawings show only the part in cross section of the main locking element 110a.

Preferably, the apparatus 100 comprises an additional cutting device 112, positioned outside the main cutting device 110 in such a way as to surround it.

Advantageously, the additional cutting device 112 is equipped with a cylindrical cutting edge configured to make a preliminary cut of the sheet "F" of filter material, interposed between the main cutting device 110 and the upper flange 107, along a preliminary cutting line 12. The above-mentioned preliminary cut is aimed at obtaining the piece "S" of filter material, designed for the subsequent cuts by the first cylindrical blade 111.

Preferably, the preliminary cutting line 12 of the additional cutting device 112 is substantially circular and has a diameter greater than that obtained subsequently with the first cylindrical blade 111 of the main cutting device 110.

In the embodiment illustrated, the additional cutting device 112 comprises a second cylindrical blade 113 having a diameter preferably between 470 and 570 mm. For simplicity, the drawings show only the part in cross-section of the cylindrical blade 113.

Preferably, the apparatus 100 comprises an additional locking element 112a, associated with the additional cutting device 112 and configured to lock the sheet "F" of filter material to favour its cutting by the additional cutting device 112. For simplicity, the drawings show only the part in cross section of the main locking element 110a.

In the embodiment illustrated, the upper flange 107 has respective contact grooves for the main cutting device 110 and for the additional cutting device 112.

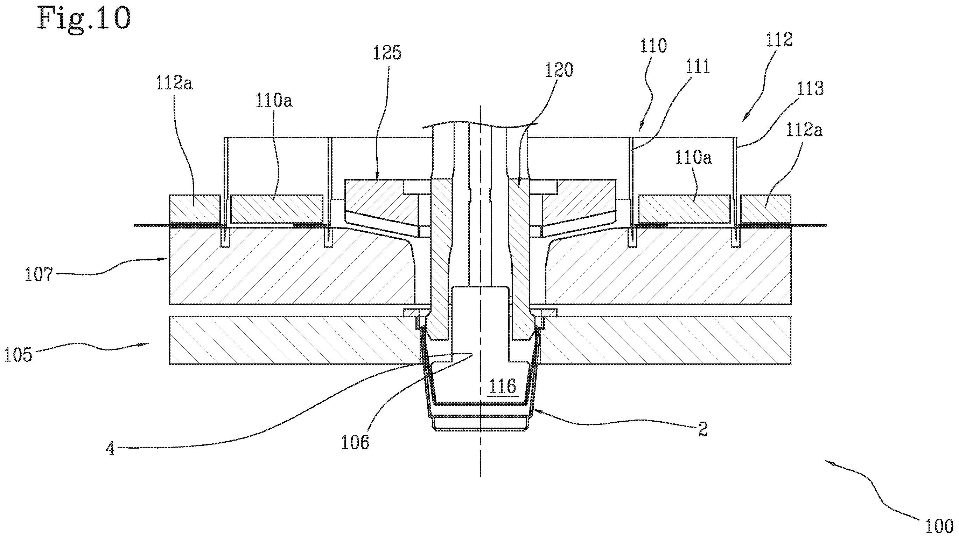

The pushing element 115 is movable, preferably along the axis of extension "X", towards and away from the central hole 108 between a withdrawn position (illustrated in Figure 3), above the upper flange 107, and a forward position (illustrated in Figure 10), wherein the hole 108 is completely crossed to reach the inside of the rigid body 2. In the passage from the withdrawn position to the advanced position, the pushing element 115 strikes a central portion of the piece "S" of filter material interposed between the main cutting device 110 and the upper flange 107 and pulls the piece "S" of filter material into the hole 108. Preferably, the pushing element 115 comprises a head 116, configured to enter the rigid cup-shaped boy 2 after passing through the central hole 108, and a stem 117 connected to the head 116.

More specifically, the head 116 is designed to pull the piece "S" of filter material, located on the upper flange 107, through the central hole 108 and, after being cut further by the main cutting device 110, inside the rigid cup-shaped body 2 located in the housing seat 106. The above-mentioned pulling is performed by applying a pressure on the central portion of the piece "S" of filter material in such a way as to fold the piece "S" of filter material to obtain a concave shape with the cavity facing upwards, designed to contain a dose of product "D" (for example coffee powder).

In at least one embodiment, the head 116 has radial grooves on the outer surface (not illustrated) designed to favour the formation of a predetermined wrinkle on the piece "S" of filter material during its feeding through the hole 108.

Preferably, the pushing element 115 is moved by an actuator (not illustrated) connected to the stem 117.

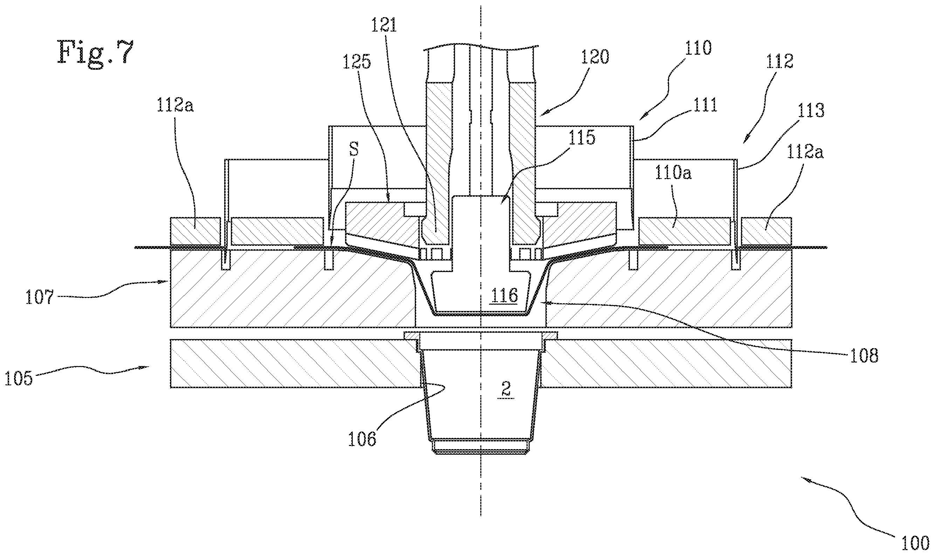

Advantageously, the pushing element 115 is configured to adopt a predetermined intermediate position (Figure 7), between the withdrawn and advanced positions.

The sealing element 120 is configured for sealing a perimeter portion of the filter 4 to a lateral inner surface of the rigid cup-shaped body 2. In the embodiment illustrated, the sealing element 120 is configured for sealing the filter 4 along a predetermined fixing line 14 on the side wall 2a located at a distance from the upper opening 2c which is fixed and identical for all the dimensions of the filter 4.

The sealing element 120 preferably comprises a sonotrode 121, positioned outside the pushing element 115 and coaxial with it. Preferably, the sealing element 121 can be moved axially away from and towards the housing seat 106 between a raised position and a lowered position where it is suitable for performing the above-mentioned sealing, preferably independently of the pushing element 115. In the embodiment illustrated, the sealing element 121 can be moved along the axis of extension "X". Preferably, the central hole 108 of the upper flange 107 is configured to allow simultaneous movements of the pushing element 115 and of the sealing element 120 towards and away from the housing seat 106.

The sealing element 120 is positioned at the fixing line 14 when the pushing element 115 is in the advanced position.

Preferably, a sonotrode may be used as sealing element to perform an ultrasonic sealing.

Advantageously, the apparatus 100 comprises a control unit, configured to operate the main cutting device 110 when the pushing element 115 is in the above-mentioned predetermined intermediate position. The control unit is also active on the pushing element 115 for varying the intermediate position and/or the advanced position.

Adjusting the intermediate position has the effect of varying the position of the piece "S" of filter material at the moment of cutting by the main cutting device 110 to obtain the filter 4. Consequently, the size of the filter 4 after cutting along the predetermined main cutting line 10 depends advantageously on the choice of the intermediate position.

In other words, although the diameter of the main cutting device 110 is fixed, the dimensions of the piece cut by it vary according to the intermediate position made to adopt the pushing element 115, when the main cutting device 110 performs the cut.

At the intermediate position, the pushing element 115 pauses and the main cutting device 110 cuts the piece "S" of filter material.

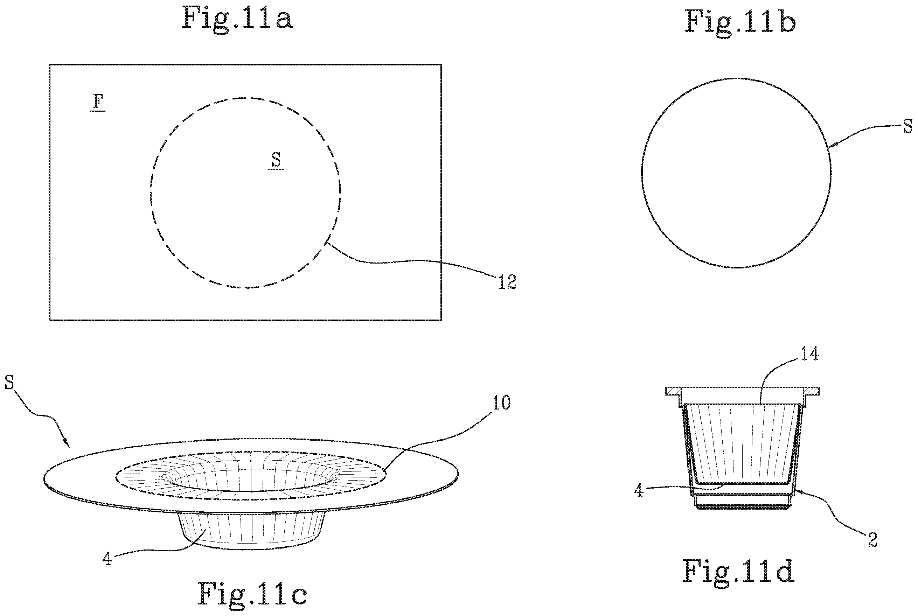

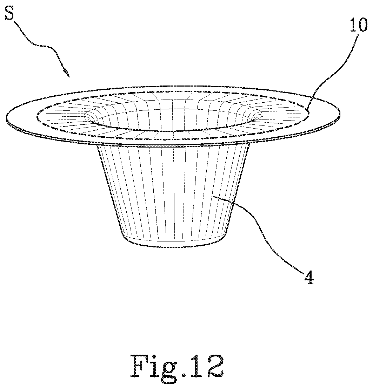

Figures 11c and 12 schematically illustrate a cut made along the main cutting line 10 at different intermediate positions to obtain different dimensions of the filter 4.

The adjustment of the advanced position of the pushing element 115 has the effect of controlling the final position of the filter 4 in the rigid cup-shaped body 2 and defines the position in which the sealing occurs on the side wall 2a of the rigid cup-shaped body 2.

Preferably, the control unit is designed to activate the sealing element 120 when the above-mentioned pushing element 115 is in the advanced position. Advantageously, the control unit adjusts the position of the advanced position of the pushing element 115 in such a way as to position a perimeter portion of the filter 4 on the predetermined fixing line 14.

In at least one embodiment, the apparatus 100 comprises an interface for adjusting the intermediate and/or advanced position by part of a user.

Preferably, the apparatus 100 comprises a guide element 125, above the upper flange 107 and able to be moved towards and away from the latter along the axis of extension "X". The guide element 125 has a central cavity positioned aligned with the central hole 108 of the upper flange 107 and configured to allow the pushing element 115 and the sealing element 120 to pass through it. The guide element 125 defines with the upper flange 107, in a configuration close to the upper flange 107, a gap for slidably housing the piece "S" of filter material. The guide element 125 may also have grooves, radial in the above-mentioned central cavity, at least in a zone ending in the central cavity for generating radial folds on the piece "S" of filter material during its pushing by the pushing element 115, in such a way as to favour a wrinkle on the filter 4.

The invention also relates to a method for making single-use beverage capsules of the type described above, preferably using the apparatus 100 described above.

The above-mentioned method comprises a step of providing a rigid cup-shaped body 2 of the type described above.

The method according to the invention also comprises a step of preparing a piece "S" of filter material, preferably of filter paper for coffee or tea, on top of an upper flange 107 having a central hole 108.

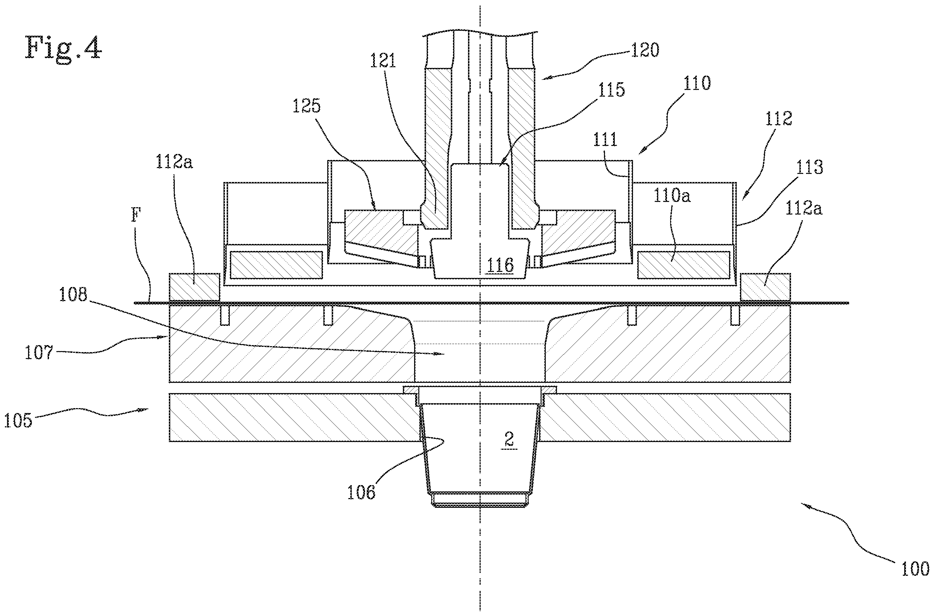

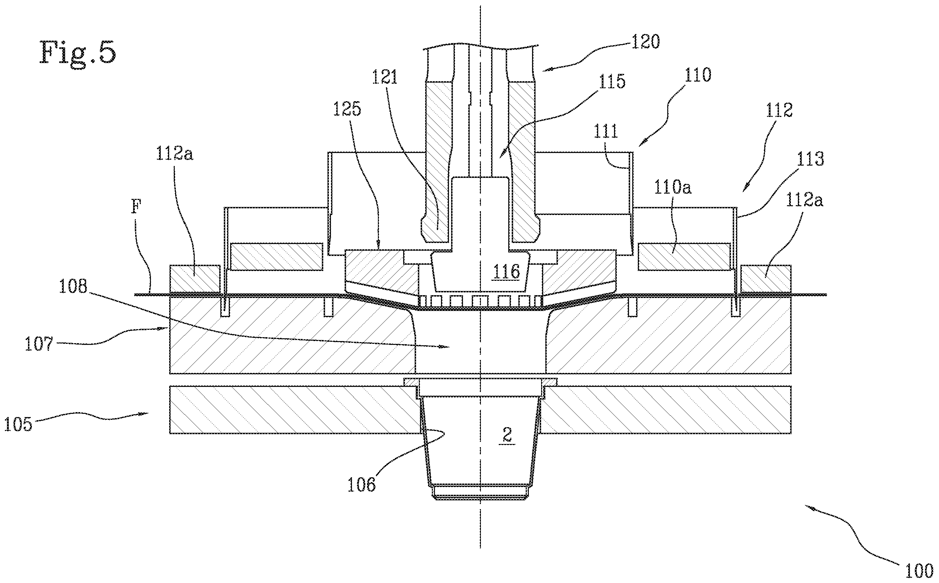

Preferably, the step of preparing a piece "S" of filter material comprises a step of preparing a sheet "F" of filter material above the upper flange 107 (Figure 3), performing a preliminary locking of the sheet "F" of filter material above the upper flange 107 (Figure 4) and performing a preliminary cut of the sheet "F" of filter material (Figure 5).

Preferably, the step of performing a preliminary locking of the sheet "F" of filter material above the upper flange 107 is performed by a lowering of an additional locking element 112a of the type described above.

Preferably, the step of performing a preliminary cutting of the sheet "F" of filter material comprises moving an additional cutting device 112 provided with a cutting edge in the direction of the sheet "F" of filter material, until coming into contact with the sheet "F" and cutting it along a preliminary cutting line 12 (illustrated in Figure 11a), preferably substantially circular, thus obtaining the piece "S" of filter material. More specifically, this preliminary cutting step may be carried out by punching the sheet "F".

Preferably, the additional cutting device 112 comprises a second cylindrical blade 113.

The step of preparing a piece "S" of filter material is illustrated, in one embodiment, in Figures 3 to 5 and 11a, the piece "S" of resulting filter material is illustrated in Figure 11b.

In a different embodiment, the sheet "F" is cut into a different cutting station and the piece "S" ready is conveyed and positioned above the central hole 108 of the upper flange 107.

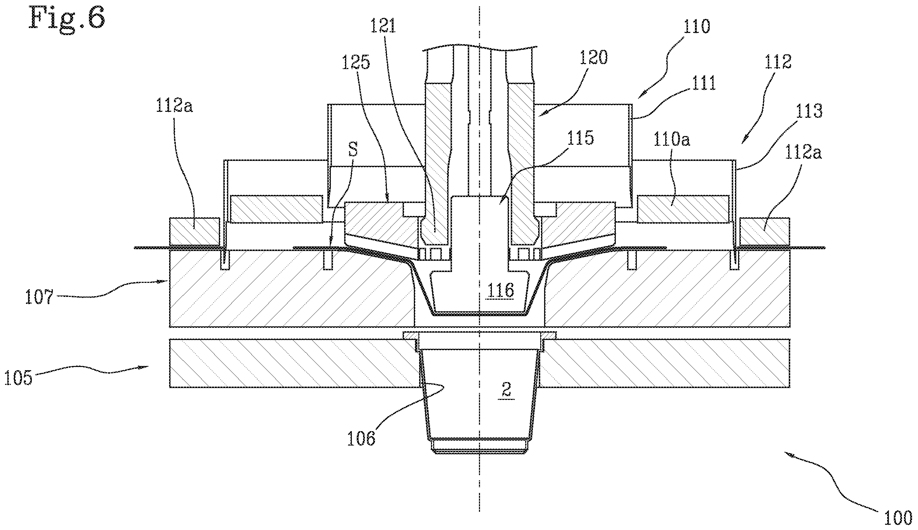

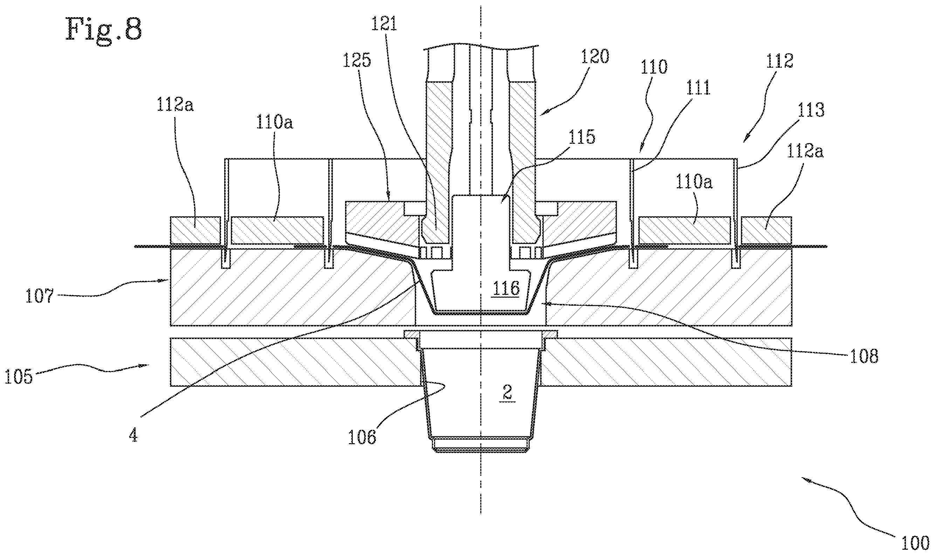

Subsequently, the method according to the invention comprises actuating a first step of feeding (Figure 6), using a pushing element 115, a central portion of the piece "S" of filter material towards the housing seat 106, up to a predetermined intermediate position (Figures 7 and 8). The pushing element 115 is actuated in such a way as to pull the piece "S" of filter material along the central hole 108 towards the rigid cup-shaped body 2 making it slide on the upper flange 107.

Subsequently, upon reaching the predetermined intermediate position of the pushing element 115, the method according to the invention comprises a step of carrying out a main locking of the piece S of filter material relative to the upper flange 107 and performing a main cut of the piece "S" of filter material along the main cutting line 10 (Figure 8), thus obtaining a filter 4 of the desired size.

Preferably, the step of locking the main piece S of filter material relative to the upper flange 107 is accomplished by a main locking element 110a of the type described above.

Preferably, the step of performing a main cut of the piece "S" of filter material comprises moving a main cutting device 110, of the type described above, provided with a cutting edge, towards the piece "S" of filter material, until making contact with the piece "S" and cutting it along a predetermined main closed cutting line 10 to define the filter 4 of the type described above (Figure 8).

The main cutting line 10 extends substantially in a circular fashion around the central portion of the piece "S". Moreover, the filter 4 is cut in such a way as to be provided with a surface and a perimeter shape suitable for insertion into the rigid body 2 described above.

Advantageously, the predetermined intermediate position of the pushing element 115 described above is adjustable, in such a way as to be able to adjust the size of the filter 4.

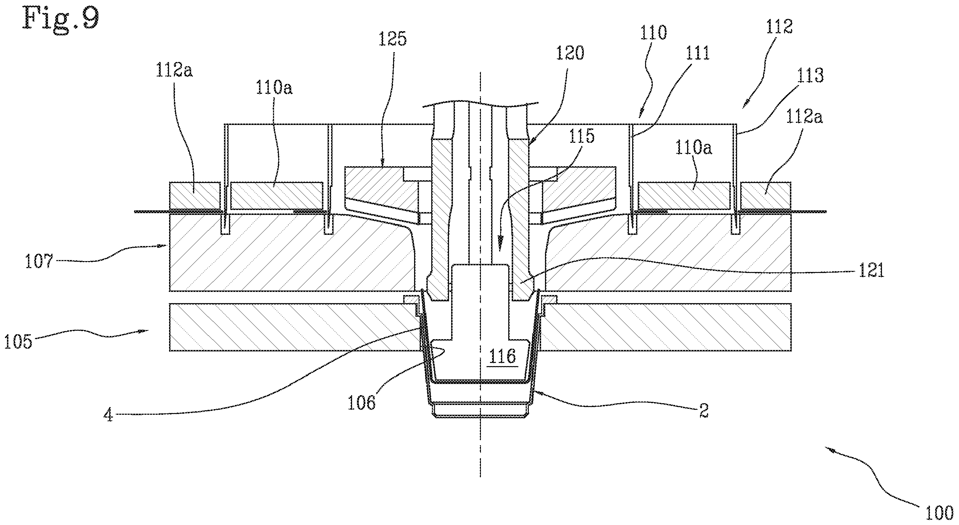

After the main cutting step, this method comprises actuating, preferably using the pushing element 115, a second step of feeding the filter 4 (Figure 9) inside the rigid body 2, until reaching a desired final position (illustrated in Figure 10). More specifically, the desired final position is suitable for fixing a perimeter portion of the filter 4 to the inner surface of the rigid cup-shaped body 2 along a fixing line 14.

Preferably, the method according to the invention comprises a step of generating radial folds on the piece (S) of filter material and on the filter 4. More specifically, the step of generating radial folds is performed using a guide element 125 of the type described above. Advantageously, it is designed to create a wrinkle on the surface of the filter 4.

After the second feeding step, the method according to the invention comprises the step of fixing, preferably by sealing, a perimeter portion of the filter 4 to the inner surface of the rigid cup-shaped body 2, in particular along the above-mentioned predetermined fixing line 14, shown in Figure 11d. Advantageously, the final position is adjustable.

The invention achieves the set aim by overcoming the drawbacks of the prior art, since the method and the apparatus 100 described above allow adjusting the cutting of a piece "S" of filter material in such a way as to make, with a single machine, filters for single-use capsules for beverages of the type described above of different sizes. The invention therefore increases the flexibility of the machinery for the production of single-use capsules and allows a greater diversification of the production compared with the prior art. The invention also allows the use of filters with different sizes without increasing the number of cutting stations.

## Claims

1. A method for making single-use beverage capsules, said capsules having a rigid cup-shaped body (2) equipped with a closed base (2b) and an upper opening (2c), and a filter (4) having a concave shape and positioned inside the rigid body (2) to form a chamber for containing a dose of product (D), said method comprising the following steps:
- providing an upper flange (107) having at least one hole (108);
- providing a support (105) having at least one housing seat (106) for housing said rigid cup-shaped body (2), said support (105) being positioned under the upper flange (107) with the housing seat (106) aligned with the hole (108);
- inserting the rigid cup-shaped body (2) into said housing seat (106) with the upper opening (2c) close to the support (105);
- providing a piece (S) of filter material above the upper flange (107);
- actuating a first step of feeding, using a pushing element (115), a central portion of said piece (S) of filter material towards said hole (108), up to a first position;
- upon reaching said first position of the pushing element (115), a main locking of said piece (S) of filter material relative to said upper flange (107) is performed,
the method being **characterised in that** it comprises the following further steps:
- making a main cut of said piece (S) of filter material along a main closed cutting line (10), extending substantially circularly about said central portion, to obtain a filter (4) for infusion of beverages;
- after the step of making the main cut, actuating a second step of feeding, using the pushing element (115), the filter (4) towards said housing seat (106), from the first position to a desired final position, suitable for fixing said filter (4) to an inner surface of said rigid cup-shaped body (2); then
- fixing a perimeter portion of the filter (4) to said inner surface of the rigid cup-shaped body (2);
wherein said first and/or second feeding step are performed in an adjustable way in such a way as to vary, respectively, a position of said filter (4) relative to the main closed cutting line (10) and/or to said desired final position.

2. The method according to claim 1, wherein said first and second feeding steps are performed in an adjustable manner in such a way as to vary the desired final position of the filter (4) keeping unchanged the position where the perimeter portion of the filter (4) is fixed to the inner surface of the rigid cup-shaped body (2).

3. The method according to claim 1 or 2, wherein the step of making a main cut of said piece (S) of filter material to define said filter (4) comprises a step of moving a main cutting device (110) equipped with a cutting edge in the direction of the piece (S) of filter material, until making contact with said piece (S) of filter material and cutting it.

4. The method according to any one of the preceding claims, wherein the following steps are carried out before the first feeding step:
- placing a sheet (F) of filter material above said upper flange (107);
- carrying out a preliminary locking of said sheet (F) of filter material above said upper flange (107); and
- performing a preliminary cutting of said sheet (F) of filter material to obtain said piece (S) of filter material.

5. The method according to claim 4, wherein the step of carrying out a preliminary cutting of said sheet (F) of filter material to obtain said piece (S) of filter material comprises: moving an additional cutting device (112) provided with a cutting edge in the direction of said sheet (F) of filter material, until making contact with said sheet (F) of filter material and cutting it.

6. The method according to any one of the preceding claims, comprising, simultaneously with the first feeding step, a step of generating radial folds on the piece (S) of filter material and/or, simultaneously with the second feeding step, a step of generating radial folds on the filter (4).

7. An apparatus (100) for making single-use beverage capsules, said capsules comprising a rigid cup-shaped body (2), having a closed base (2b) and an upper opening (2c), and a filter (4) having a concave cross section, positioned inside the rigid body (2) to form a chamber for containing a dose of product (D), said apparatus (100) comprising:
- a support (105) comprising a seat (106) for housing a rigid cup-shaped body (2);
- an upper flange (107) comprising a hole (108), said upper flange (107) being positioned above the support (105), positioning the hole (108) aligned with the housing seat (106);
- a pushing element (115) facing said hole (108) and movable between a withdrawn position, outside the hole (108), and an advanced position, inside the hole (108), said pushing element (115) having a shape suitable for intercepting a central portion of the piece (S) positioned on the upper flange (107) and pulling the piece (S) of filter material into the hole (108);
- a main locking element (110a) configured to lock said piece (S) of filter material against the upper flange (107);
**characterized in that** the apparatus further comprises:
- a main cutting device (110) positioned above said upper flange (107) and configured to make a main cut of said piece (S) of filter material, whilst said piece (S) is locked by the main locking element (110a), along a main closed cutting line (10), having a substantially circular extension around said central portion, to obtain the filter (4) or infusion of beverages; said main cut being performed when reaching an intermediate position, located between said withdrawn and advanced positions;
- a sealing element (120), configured to fix a perimeter portion of the filter (4) along an inner surface of the rigid cup-shaped body (2) inserted in said housing seat (106), after said pushing element (115) has fed the filter (4) towards said housing seat (106), moving the filter (4) from the intermediate position to the advanced position;
- a control unit configured to actuate said main cutting device (110) when the pushing element (115) is in said intermediate position, in such a way that the cut on the piece (S) of filter material occurs when the pushing element (115) is at said intermediate position, said control unit also controlling the pushing element (115) for actuating it in such a way as to vary, respectively, a position of said filter (4) relative to said main closed cutting line (10) and/or to the advanced position.

8. The apparatus (100) according to claim 7, wherein said main cutting device (110) comprises a first cylindrical blade (111).

9. The apparatus (100) according to claim 8, comprising an additional cutting device (112), positioned outside the main cutting device (110) and configured to cut a sheet (F) of filter material along a preliminary cutting line (12), in such a way as to obtain said piece (S) of filter material, said preliminary cutting line (12) of the additional cutting device (112) preferably having a substantially circular shape.

10. The apparatus (100) according to claim 9, further comprising an additional locking element (112a), acting in conjunction with the additional cutting device (112), for locking said sheet (F) of filter material relative to said upper flange (107).

11. The apparatus (100) according to any one of claims 7 to 10, wherein the sealing element (120) comprises a sonotrode (121) with a hollow tubular shape, positioned about said pushing element (115) and movable axially towards and away from the housing seat (106), preferably independently of the pushing element (115).

12. The apparatus (100) according to any one of claims 7 to 11, comprising a guide element (125) above the upper flange (107) and movable from, and towards, the upper flange (107), and having a central cavity sized to allow the passing through of said pushing element (115).

13. The apparatus (100) according to claim 12, wherein the guide element (125) has radial grooves relative to said central cavity, positioned to favour the formation of wrinkles on said piece (S) of filter material.

## Patentansprüche

1. Verfahren zur Herstellung von Einweg-Getränkekapseln, wobei die Kapseln ein steifes becherförmiges Gehäuse (2) aufweisen, das mit einer geschlossenen Basis (2b) und einer oberen Öffnung (2c) ausgestattet ist, und einen Filter (4), der eine konkave Form aufweist und im steifen Gehäuse (2) positioniert ist, um eine Kammer zum Enthalten einer Produktdosis (D) zu bilden, wobei das Verfahren die folgenden Schritte umfasst:
- Bereitstellen eines oberen Flanschs (107), aufweisend mindestens ein Loch (108);
- Bereitstellen einer Halterung (105), aufweisend mindestens einen Aufnahmesitz (106) zum Aufnehmen des steifen becherförmigen Gehäuses (2), wobei die Halterung (105) unter dem oberen Flansch (107) positioniert ist und der Aufnahmesitz (106) fluchtend zum Loch (108) angeordnet ist;
- Einfügen des steifen becherförmigen Gehäuses (2) in den Aufnahmesitz (106), wobei die obere Öffnung (2c) nah an der Halterung (105) angeordnet ist;
- Bereitstellen eines Stücks (S) aus Filtermaterial über dem oberen Flansch (107);
- Betätigen eines ersten Schritts, um einen mittigen Abschnitt des Stücks (S) aus Filtermaterial (S) unter Nutzung eines Schubelements (115) hinführend zum Loch (108) bis zu einer ersten Position zuzuführen;
- bei Erreichen der ersten Position des Schubelements (115) wird ein Hauptfestspannen des Stücks (S) aus Filtermaterial relativ zum oberen Flansch (107) durchgeführt,
wobei das Verfahren **dadurch gekennzeichnet ist, dass** es die folgenden weiteren Schritte umfasst:
- Ausbilden eines Hauptschnitts des Stücks (S) aus Filtermaterial entlang einer geschlossenen Hauptschnittlinie (10), die sich im Wesentlichen kreisförmig um den mittigen Abschnitt erstreckt, um einen Filter (4) zum Brühen von Getränken zu erhalten;
- nach dem Schritt zum Ausbilden des Hauptschnitts Betätigen eines zweiten Schritts zum Zuführen des Filters (4) hinführend zum Aufnahmesitz (106) unter Verwendung des Schubelements (115) von der ersten Position zu einer gewünschten finalen Position, die geeignet ist, um den Filter (4) an einer inneren Oberfläche des steifen becherförmigen Gehäuses (2) zu fixieren, dann
- Fixieren eines Umfangsabschnitts des Filters (4) an der inneren Oberfläche des steifen becherförmigen Gehäuses (2),
wobei der erste und/oder der zweite Zuführungsschritt auf justierbare Weise durchgeführt werden, sodass jeweils eine Position des Filters (4) relativ zur geschlossenen Hauptschnittlinie (10) und/oder zur gewünschten finalen Position variiert wird.

2. Verfahren nach Anspruch 1, wobei der erste und der zweite Zuführungsschritt auf eine justierbare Weise durchgeführt werden, sodass die gewünschte finale Position des Filters (4) variiert wird, wobei die Position, in der der Umfangsabschnitt des Filters (4) an der inneren Oberfläche des steifen becherförmigen Gehäuses (2) fixiert ist, unverändert beibehalten wird.

3. Verfahren nach Anspruch 1 oder 2, wobei der Schritt zum Ausbilden eines Hauptschnitts des Stücks (S) aus Filtermaterial, um den Filter (4) zu definieren, einen Schritt zum Bewegen eines Hauptschneidegeräts (110) umfasst, das mit einer Schneide in Richtung des Stücks (S) aus Filtermaterial versehen ist, bis der Kontakt mit dem Stück (S) aus Filtermaterial hergestellt ist und dieses geschnitten wird.

4. Verfahren nach einem der vorhergehenden Ansprüche, wobei die folgenden Schritte vor dem ersten Zuführungsschritt durchgeführt werden:
- Platzieren einer Folie (F) aus Filtermaterial über dem oberen Flansch (107);
- Durchführen eines vorbereitenden Festspannens der Folie (F) aus Filtermaterial über dem oberen Flansch (107); und
- Durchführen eines Vorschneidens der Folie (F) aus Filtermaterial, um das Stück (S) aus Filtermaterial zu erhalten.

5. Verfahren nach Anspruch 4, wobei der Schritt zum Durchführen eines Vorschneidens der Folie (F) aus Filtermaterial, um das Stück (S) aus Filtermaterial zu erhalten, Folgendes umfasst: Bewegen eines zusätzlichen Schneidegeräts (112), das mit einer Schneide in Richtung der Folie (F) aus Filtermaterial versehen ist, bis der Kontakt zur Folie (F) aus Filtermaterial hergestellt ist und diese geschnitten wird.

6. Verfahren nach einem der vorhergehenden Ansprüche, umfassend gleichzeitig mit dem ersten Zuführungsschritt einen Schritt zum Erzeugen von radialen Falzen des Stücks (S) aus Filtermaterial und/oder gleichzeitig mit dem zweiten Zuführungsschritt einen Schritt zum Erzeugen radialer Falze auf dem Filter (4).

7. Vorrichtung (100) zur Herstellung von Einweg-Getränkekapseln, wobei die Kapseln ein steifes becherförmiges Gehäuse (2) aufweisen, aufweisend eine geschlossene Basis (2b) und eine obere Öffnung (2c), und einen Filter (4), aufweisend einen konkaven Querschnitt, der im steifen Gehäuse (2) positioniert ist, um eine Kammer zum Enthalten einer Produktdosis (D) zu bilden, wobei die Vorrichtung (100) Folgendes umfasst:
- eine Halterung (105), umfassend einen Sitz (106) zum Aufnehmen eines steifen becherförmigen Gehäuses (2);
- einen oberen Flansch (107), umfassend ein Loch (108), wobei der obere Flansch (107) über der Halterung (105) positioniert ist und das Loch (108) fluchtend zum Aufnahmesitz (106) positioniert wird;
- ein Schubelement (115), das dem Loch (108) zugewandt und zwischen einer eingefahrenen Position außerhalb des Lochs (108) und einer vorgeschobenen Position innerhalb des Lochs (108) bewegbar ist, wobei das Schubelement (115) eine Form aufweist, die geeignet ist, um einen mittigen Abschnitt des Stücks (S) abzufangen, der auf dem oberen Flansch (107) positioniert ist, und um das Stück (S) aus Filtermaterial ins Loch (108) zu ziehen;
- ein Hauptfestspannelement (110a), das ausgelegt ist, um das Stück (S) aus Filtermaterial gegen den oberen Flansch (107) festzuspannen,
**dadurch gekennzeichnet, dass** die Vorrichtung Folgendes umfasst:
- ein Hauptschneidegerät (110), das über dem oberen Flansch (107) positioniert und ausgelegt ist, um einen Hauptschnitt des Stücks (S) aus Filtermaterial, während das Stück (S) durch das Hauptfestspannelement (110a) festgespannt ist, entlang einer geschlossenen Hauptschnittlinie (10), die eine im Wesentlichen kreisförmige Ausdehnung rund um den mittigen Abschnitt aufweist, herzustellen, um den Filter (4) zum Brühen von Getränken zu erhalten, wobei der Hauptschnitt durchgeführt wird, wenn eine Zwischenposition erreicht wird, die zwischen der eingefahrenen und der vorgeschobenen Position befindlich ist;
- ein Siegelelement (120), das ausgelegt ist, um einen Umfangsabschnitt des Filters (4) entlang einer inneren Oberfläche des steifen becherförmigen Gehäuses (2), das in den Aufnahmesitz (106) eingefügt ist, zu fixieren, nachdem das Schubelement (115) den Filter (4) hinführend zum Aufnahmesitz (106) zugeführt hat, indem der Filter (4) von der Zwischenposition zur vorgeschobenen Position bewegt wird;
- eine Steuereinheit, die ausgelegt ist, um das Hauptschneidegerät (110) zu betätigen, wenn sich das Schubelement (115) in der Zwischenposition befindet, sodass der Schnitt auf dem Stück (S) aus Filtermaterial erfolgt, wenn sich das Schubelement (115) an der Zwischenposition befindet, wobei die Steuereinheit auch das Schubelement (115) steuert, um es so zu betätigen, dass jeweils eine Position des Filters (4) relativ zur geschlossenen Hauptschnittlinie (10) und/oder zur vorgeschobenen Position variiert wird.

8. Vorrichtung (100) nach Anspruch 7, wobei das Hauptschneidegerät (110) ein erstes zylindrisches Messer (111) umfasst.

9. Vorrichtung (100) nach Anspruch 8, umfassend ein zusätzliches Schneidegerät (112), das außerhalb des Hauptschneidegeräts (110) positioniert und ausgelegt ist, um eine Folie (F) aus Filtermaterial entlang einer Vorschnittlinie (12) zu schneiden, sodass das Stück (S) aus Filtermaterial erhalten wird, wobei die Vorschnittlinie (12) des zusätzlichen Schneidegeräts (112) vorzugsweise im Wesentlichen eine Kreisform aufweist.

10. Vorrichtung (100) nach Anspruch 9, zudem umfassend ein zusätzliches Festspannelement (112a), das in Verbindung mit dem zusätzlichen Schneidegerät (112) wirkt, um die Folie (F) aus Filtermaterial relativ zum oberen Flansch (107) festzuspannen.

11. Vorrichtung (100) nach einem der Ansprüche 7 bis 10, wobei das Siegelelement (120) eine Sonotrode (121) mit einer hohlen Rohrform aufweist, die um das Schubelement (115) positioniert und axial hinführend zum und wegführend vom Aufnahmesitz (106) bewegbar ist, vorzugsweise unabhängig vom Schubelement (115).

12. Vorrichtung (100) nach einem der Ansprüche 7 bis 11, umfassend ein Führungselement (125) über dem oberen Flansch (107) und bewegbar vom und hinführend zum oberen Flansch (107) und aufweisend einen mittigen Hohlraum, der so bemessen ist, dass das Durchführen des Schubelements (115) erlaubt wird.

13. Vorrichtung (100) nach Anspruch 12, wobei das Führungselement (125) radiale Rillen relativ zum mittigen Hohlraum aufweist, die positioniert sind, um die Bildung von Falten auf dem Stück (S) aus Filtermaterial zu begünstigen.

## Revendications

1. Procédé de fabrication de capsules à usage unique pour boissons, lesdites capsules comportant un corps rigide en forme de coupe (2) équipé d'une base fermée (2b) et d'une ouverture supérieure (2c), et un filtre (4) ayant une forme concave et positionné à l'intérieur du corps rigide (2) pour former une chambre pour contenir une dose de produit (D), ledit procédé comprenant les étapes suivantes :
- prévoir une bride supérieure (107) comportant au moins un trou (108) ;
- prévoir un support (105) comportant au moins un siège de logement (106) pour loger ledit corps rigide en forme de coupe (2), ledit support (105) étant positionné sous la bride supérieure (107) avec le siège de logement (106) aligné avec le trou (108) ;
- insérer le corps rigide en forme de coupe (2) dans ledit siège de logement (106) avec l'ouverture supérieure (2c) proche du support (105) ;
- prévoir un morceau (S) de matériau filtrant au-dessus de la bride supérieure (107) ;
- actionner une première étape d'alimentation, à l'aide d'un élément de poussée (115), d'une partie centrale dudit morceau (S) de matériau filtrant vers ledit trou (108), jusqu'à une première position ;
- en atteignant ladite première position de l'élément de poussée (115), un verrouillage principal dudit morceau (S) de matériau filtrant par rapport à ladite bride supérieure (107) est effectué,
le procédé étant **caractérisé en ce qu'**il comprend les étapes supplémentaires suivantes :
- effectuer une découpe principale dudit morceau (S) de matériau filtrant le long d'une ligne de découpe (10) principale fermée, se prolongeant de manière essentiellement circulaire autour de ladite partie centrale, afin d'obtenir un filtre (4) pour l'infusion de boissons ;
- après l'étape de réalisation de la découpe principale, actionner une deuxième étape d'alimentation, à l'aide de l'élément de poussée (115), du filtre (4) vers ledit siège de logement (106), de la première position à une position finale souhaitée, adaptée pour fixer ledit filtre (4) à une surface intérieure dudit corps rigide en forme de coupe (2) ; puis
- fixer une partie du périmètre du filtre (4) à ladite surface intérieure du corps rigide en forme de coupe (2) ;
dans lequel ladite première et/ou deuxième étape d'alimentation est/sont effectuée(s) de manière réglable de façon à faire varier, respectivement, une position dudit filtre (4) par rapport à la ligne de découpe principale fermée (10) et/ou à ladite position finale souhaitée.

2. Procédé selon la revendication 1, dans lequel lesdites première et deuxième étapes d'alimentation sont effectuées de manière réglable de façon à faire varier la position finale souhaitée du filtre (4) en maintenant inchangée la position dans laquelle la partie du périmètre du filtre (4) est fixée à la surface intérieure du corps rigide en forme de coupe (2).

3. Procédé selon la revendication 1 ou 2, dans lequel l'étape consistant à effectuer une découpe principale dudit morceau (S) de matériau filtrant pour définir ledit filtre (4) comprend une étape consistant à déplacer un dispositif de découpe principale (110) équipé d'un bord tranchant en direction du morceau (S) de matériau filtrant, jusqu'à entrer en contact avec ledit morceau (S) de matériau filtrant et à le couper.

4. Procédé selon l'une quelconque des revendications précédentes, dans lequel les étapes suivantes sont effectuées avant la première étape d'alimentation :
- placer une feuille (F) de matériau filtrant au-dessus de ladite bride supérieure (107) ;
- effectuer un verrouillage préliminaire de ladite feuille (F) de matériau filtrant au-dessus de ladite bride supérieure (107) ; et
- effectuer une découpe préliminaire de ladite feuille (F) de matériau filtrant pour obtenir ledit morceau (S) de matériau filtrant.

5. Procédé selon la revendication 4, dans lequel l'étape consistant à effectuer une découpe préliminaire de ladite feuille (F) de matériau filtrant pour obtenir ledit morceau (S) de matériau filtrant comprend : déplacer un dispositif de découpe supplémentaire (112) pourvu d'un bord tranchant en direction de ladite feuille (F) de matériau filtrant, jusqu'à entrer en contact avec ladite feuille (F) de matériau filtrant et la découper.

6. Procédé selon l'une quelconque des revendications précédentes, comprenant, simultanément à la première étape d'alimentation, une étape consistant à générer des plis radiaux sur le morceau (S) de matériau filtrant et/ou, simultanément à la deuxième étape d'alimentation, une étape consistant à générer des plis radiaux sur le filtre (4).

7. Appareil (100) de fabrication de capsules à usage unique pour boissons, lesdites capsules comprenant un corps rigide en forme de coupe (2), comportant une base fermée (2b) et une ouverture supérieure (2c), et un filtre (4) comportant une section transversale concave, positionné à l'intérieur du corps rigide (2) pour former une chambre destinée à contenir une dose de produit (D), ledit appareil (100) comprenant :
- un support (105), comprenant un siège (106) pour loger un corps rigide en forme de coupe (2) ;
- une bride supérieure (107), comprenant un trou (108), ladite bride supérieure (107) étant positionnée au-dessus du support (105), positionnant le trou (108) aligné avec le siège du logement (106) ;
- un élément de poussée (115) faisant face audit trou (108) et mobile entre une position de retrait, à l'extérieur du trou (108), et une position avancée, à l'intérieur du trou (108), ledit élément de poussée (115) ayant une forme appropriée pour intercepter une partie centrale du morceau (S) positionné sur la bride supérieure (107) et tirer le morceau (S) de matériau filtrant dans le trou (108) ;
- un élément de verrouillage principal (110a) configuré pour verrouiller ledit morceau (S) de matériau filtrant contre la bride supérieure (107) ;
**caractérisé en ce que** l'appareil comprend de plus :
- un dispositif de découpe principale (110) positionné au-dessus de ladite bride supérieure (107) et configuré pour effectuer une découpe principale dudit morceau (S) de matériau filtrant, alors que ledit morceau (S) est verrouillé par l'élément de verrouillage principal (110a), le long d'une ligne de découpe principale fermée (10), comportant une extension essentiellement circulaire autour de ladite partie centrale, afin d'obtenir le filtre (4) pour l'infusion de boissons ; ladite découpe principale est effectuée en atteignant une position intermédiaire, située entre lesdites positions de retrait et avancée ;
- un élément d'étanchéité (120), configuré pour fixer une partie du périmètre du filtre (4) le long d'une surface intérieure du corps rigide en forme de coupe (2) inséré dans ledit siège de logement (106), après que ledit élément de poussée (115) ait alimenté le filtre (4) vers ledit siège de logement (106), déplaçant le filtre (4) de la position intermédiaire à la position avancée ;
- une unité de commande configurée pour actionner ledit dispositif de découpe principale (110) lorsque l'élément de poussée (115) se trouve dans ladite position intermédiaire, de telle sorte que la découpe sur le morceau (S) de matériau filtrant se produise lorsque l'élément de poussée (115) se trouve en correspondance de ladite position intermédiaire, ladite unité de commande commandant aussi l'élément de poussée (115) pour l'actionner de manière à faire varier, respectivement, une position dudit filtre (4) par rapport à ladite ligne de découpe principale fermée (10) et/ou par rapport à la position avancée.

8. Appareil (100) selon la revendication 7, dans lequel ledit dispositif de découpe principale (110) comprend une première lame cylindrique (111).

9. Appareil (100) selon la revendication 8, comprenant un dispositif de découpe supplémentaire (112), positionné à l'extérieur du dispositif de découpe principale (110) et configuré pour couper une feuille (F) de matériau filtrant le long d'une ligne de découpe préliminaire (12), de manière à obtenir ledit morceau (S) de matériau filtrant, ladite ligne de découpe préliminaire (12) du dispositif de découpe supplémentaire (112) comportant de préférence une forme essentiellement circulaire.

10. Appareil (100) selon la revendication 9, comprenant de plus un élément de verrouillage supplémentaire (112a), agissant conjointement avec le dispositif de découpe supplémentaire (112), pour verrouiller ladite feuille (F) de matériau filtrant par rapport à ladite bride supérieure (107).

11. Appareil (100) selon l'une quelconque des revendications 7 à 10, dans lequel l'élément d'étanchéité (120) comprend une sonotrode (121) de forme tubulaire creuse, positionnée autour dudit élément de poussée (115) et mobile axialement en s'approchant et en s'éloignant du siège de logement (106), de préférence indépendamment de l'élément de poussée (115).

12. Appareil (100) selon l'une quelconque des revendications 7 à 11, comprenant un élément de guidage (125) situé au-dessus de la bride supérieure (107) et mobile à partir de la bride supérieure (107) et vers celle-ci, et comportant une cavité centrale dimensionnée pour permettre le passage à travers ledit élément de poussée (115).

13. Appareil (100) selon la revendication 12, dans lequel l'élément de guidage (125) comporte des rainures radiales par rapport à ladite cavité centrale, positionnées pour favoriser la formation de ridules sur ledit morceau (S) de matériau filtrant.
